# EUROPEAN PATENT SPECIFICATION

(11) **EP 2 837 482 B1**
(45) Date of publication and mention of the grant of the patent: **27.04.2016**
(21) Application number: 13004064.5
(22) Date of filing: 16.08.2013
(51) Int. Cl.: B29C 45/44

(54) **Device and method for demoulding an undercut**
Vorrichtung und Verfahren zum Entformen einer Hinterschneidung
Dispositif et procédé de démoulage d' une contre-dépouille

(43) Date of publication of application: 18.02.2015
(73) Proprietor: Jakor, s.r.o., 093 02 Vranov nad Topl'ou (SK)
(72) Inventor: Dzurenda, Stefan, 082 12 Kapusany (SK); Mandul'ák, Ján, 093 01 Vranov nad Topl'ou (SK); Mandul'ák, Dusan, 093 01 Vranov nad Topl'ou (SK)
(74) Representative: Vojcik, Peter

(56) References cited:
- JP-A- H0 966 547
- US-A1- 2012 244 238

## Description

### Field of the Invention

The present invention relates to a device and method for the demoulding of the undercuts in mould design in the sector of thermoplastic and thermosetting polymers, particularly relates to a construction unit capable of applications in moulds for thermoplastics and thermosets which provides a demoulding of parallel undercuts or the surfaces that are negatively with respect to the direction of an product ejection from the mould without the use of additional hydraulic power circuits. The area of application of the invention is in the sectors concerned with design and manufacture of moulds for either of the product on the basis of thermoplastics or thermosets.

### Background of the invention

In the production of moulds for demoulding of the undercuts are still used construction units enabling to demould the undercuts standardly in the range to ± 30° regarding perpendicular line to the mould axis and they are not part of the side or the top closed by geometry of demoulding component part to make the potential rotated ground plan orientation in the integration of those units impossible. The demoulding and movements of these construction units are derived from opening or closing mould movement, wherein they are integrated. For example

US2012244238 discloses an injection mold for molding a product having a hook portion includes a stationary mold, a return pin, a movable mold, an ejector mechanism and a plurality of ejector pins for ejecting the product out of the injection mold. The movable mold defines an inserting perforation, a receiving groove and a receiving gap. The ejector mechanism includes a slide block located in the receiving groove, a supporting bar stretching into the receiving groove, and an inclined ejector pin having a tail at a top thereof movably inserted in the inserting perforation and fastened on the slide block. The slide block is pressed downward by the return pin when the injection mold is closed. When the injection mold is opened, the slide block drives the inclined ejector pin to move upward and sideward under an upward push of the supporting bar to make the hook portion parted from the tail.

JPH0966547 discloses an injection mold with reduced in friction resistance and capable of obtaining smooth operation even at a large angle by providing the guide movable in parallel to an inclined core pin and a rolling mechanism reducing friction resistance. In an injection mold consisting of a fixed mold and a movable mold having a movable template , an ejector plate and a movable attaching plate provided thereto in this order and having an undercut part provided to the cavity of the movable template of the movable mold, inclined core pins are provided to the movable template in a slidable manner and the ejector plate is provided behind the movable template and the movable attaching plate 16 is further provided behind the plate. Further, the parallel guides are connected to the movable template and the movable attaching plate 16 in an inclined state and the slide base guided by a rolling mechanism is provided to the parallel guides.

Another current alternative is the use of mechanical power of component springing and releasing when tools are opening, or stroking of ejection mechanism, called elastic ejectors. An example of the limitations of current possibilities is based in that, there is current limit of mechanical demoulding undercut in the range of 90° ± 30° regarding the tool opening axis with the reference limits describing of the current state in the derivation of mechanical system motions with the direction of displacement of the slider derived mechanically from the cam pin when a tool is opening.

Such a generic mould is known for example from US 2012/244230 to provide an injection mould. Said injection movable mould comprising an ejector mechanism includes a slide block located in the receiving groove, a supporting bar stretching into the receiving groove, and an inclined ejector pin having a tail at a top thereof movably inserted in the inserting perforation and fastened on the slide block. The slide block is pressed downward by the return pin when the injection mould is closed. When the injection mould is opened, the slide block drives the inclined ejector pin to move upward and sideward under an upward push of the supporting bar to make the hook portion parted from the tail.

The current solutions do not mechanically, i.e. tool movement induce movement of construction elements for the demoulding of two parallel undercuts in the range higher than 90° ± 30° perpendicularly to the direction of opening tool in a closed geometry of a component part. An example of standard solutions of mechanically operated units for demoulding of undercuts is the demoulding by a slider, for example it is known from JP H09 66547. Its principle consists in the use of mechanical power during opening the mould. The mechanical power is transferred by bevel pin on the slider and it is subsequently moved away on the path equal to the size of the angle embedding bevel pin and its length. Another example is the demoulding by fixed guided bevel ejector, where it is used movement of ejection system that pushes ejector upward mechanically, and bevel of its guide also mechanically pushes it and provides the release of component part of injection mould.

An example of standard solutions of mechanically operated construction units for demoulding of undercuts is also the demoulding by flexible ejector, whereat the principle is the similar like at the bevel ejection. The difference is the fact that the side feed reverse motion to release of negative parts of the component part using the energy of springing, which is released as soon as the ejection moulding system is ejected from mould core or mould cavity.

There are also other examples of solutions of mechanical construction units for demoulding of undercuts of moulding. However, any of them does not standardly provide the release - the demoulding of parallel surfaces of moulding with a slope higher than 90° ± 30° perpendicularly to the direction of tool opening when the component part geometry is closed.

The application of demoulding for undercuts to that extent is not possible derived from the mechanics of closing or opening mould or ejection mould system in which the construction unit is integrated. In this case there exists the solution of motion of that nodes by additional hydraulic rectilinear engine (hydraulic cylinder) with the control of movements and source of pressure hydraulic fluid by injection moulding machine systems, on which is the operated mould located. This solution is financially as well as mounting difficult and increases the cost of the tool. In case of there are several such areas and they are at different angles on proposal moulding, this can disable to use one hydraulic rectilinear motor, then there is integrated separate hydraulic rectilinear motor for each angle of slope.

### Summary of the Invention

The invention is set forth and characterized in the main claims for the device and method for the demoulding of the undercuts in mould design in the sector of thermoplastic and thermosetting polymers, while the dependent claim describe other characteristic of the device according to the aspect of the present invention. It is an aim of certain embodiments of the present invention to achieve a device and method for the demoulding of the undercuts in mould design including construction unit for the demoulding of undercuts in the closed geometry of component part. In contrast to the currently one solution for such cases in the form of hydraulic or pneumatic rectilinear motor, advantage of the proposed node is that it is compact,. easily integrated, and does not require to initiate any external power source, except the power exerted at the lifting of ejection system of mould. In the preferred embodiment of this invention, a device and method for the demoulding of the undercuts consists in using of compact block ejector of mould and directly into his body integrated slider. Embodiments of the present invention provide mutual crossing of the ejector and slider, which provide mutual crossing the ejector and slider, which provides in the extrusion of the ejection system and thus also the ejector block, a displacement of slider from the closed geometry of component part and subsequently the possibility of release i.e. ejecting of the finished moulding from the tool. The slider is integrated in ejector pin in the slope from 135° to 165° to the perpendicular to the opening tool axis. Its angular guidance is provided by a hole in the block ejector where it is embedded its body and its return is provided by a V-guide at the bottom of the slider.

The slider head is moulding/demoulding the negative geometry of the component part. Its shape is modified individually according to the proposed design and the specific geometry as individual components, moulding products.

The method for the demoulding of the undercuts in mould design in the sector of thermoplastic and thermosetting polymers according to present invention consist in the method when the ejector plate is lifted up, the block ejector pin is sliding right up in the opening tool axis.

The slider integrated in the body of block ejector pin is lifting with block ejector pin at the same time, however it is on the additional move backward i.e. outwards from the ejector pin. By this method, there is the moulding release from mould because according the present method the slider is moved away from said moulding geometry.

The method for the demoulding of the undercuts in mould design in the sector of thermoplastic and thermosetting polymers according to present invention contained the vectorisation of two movements, from linear motion at the tool axis is inferred the motion at the differential axis by equal exerted power. The return movement i.e. the return of the construction unit to its original position is again provided through ejection system of the tool, which is mechanically moving downwards, while the block ejector fixed in the ejection system copies said movement. The slider fixed in the block ejector body also moves downward but its bottom part is hold onto a V-guide, on which is slid and through which is lifted back out of the block ejector pin. Thus the shaped part of slider on its other end, opposite of a V-guide gets into position of geometry of another moulding produced in the tool (mould) containing said construction unit.

### Brief description of the drawings

These and other characteristics of the invention will be clear from the following description of a preferential form of embodiment, given as a non-restrictive example, with reference to the attached drawings wherein:

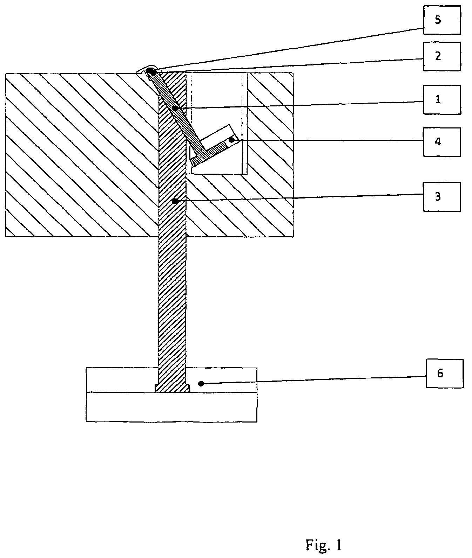

Fig. 1 shows a graphic embodiment of the present invention;

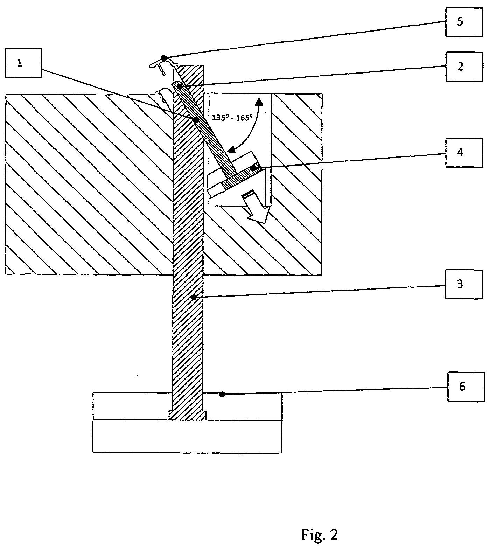

Fig. 2 shows a mechanic of construction unit provided with the device according to the invention.

### Detailed description of a preferential embodiment

with reference to the attached drawings a device and method for the demoulding of the undercuts in mould design including construction unit of block ejector 3 and right to the its body integrated slider 1, and the mutual crossing of the block ejector 3 and slider 1 provided, with the tool ejector system 6 and also the said block ejector 3, the displacement of slider 1 from the closed geometry of a moulding product 5 and subsequently releasing i.e. ejecting of the finished moulding product 5 from the tool. In the present embodiment of the invention, the slider 1 is integrated in block ejector 3 in the slope in the range from 135° to 165° to the perpendicular to the opening tool axis. Its angular guidance is provided by a hole in the block ejector 3 where it is embedded its body and its return is provided by a V-guide 4 at the end of the slider 1. The slider head 2 is able to moulding/demoulding the negative geometry of the component part. Its shape is modified individually according to the proposed design and the specific geometry as individual components (mouldings).

The examples of using of materials for the production of the components of the device according to the invention, to ensure the smooth running of the system, are carbon tool steel, hardening and tough for the block ejector. The recommended material for slider is alloy Beryllium - Copper (Ampcoloy, Mold Max) because of its high resistance to abrasion and excellent thermal conductivity. While respecting the specified manufacturing tolerances, these two key components of the design system can work without lubrication, what provides the application of tools for the sectors such as the optical or car industry. Or the mouldings requires further additional surface treatment, when there are not permitted the traces of lubricant on the surface of components, for example, vacuum steaming of AL layer, electroplating, painting, etc. the only recommended area for the use of lubricants remain backside of slider fitted in a V-guide.

The embodiments of the invention provide the method for the demoulding of the undercuts in mould .design in the sector of thermoplastic and thermosetting polymers according to present invention consist in phase, when the ejector plate of the tool ejector system 6 is lifted up, the block ejector 3 is sliding right up in the opening tool axis and the slider **1** is lifting with block ejector **3** at the same time. The slider **1** is integrated in the body of block ejector **3** and one of its end is in the V-guide **4.** The return motion is provided by that bottom of slider **1** is maintained in the V-guide **4,** which allows upwards movement of slider **1,** but it is extracted to the outside of the ejector block **3,** what make release of demoulding of a moulding product **5,** because the slider 1 is displaced from the said geometry of a moulding product **5.**
The advantage of the invention consists in using of the construction unit applicable for the moulding for thermoplastic and thermoset, which enables demoulding of the parallel negative surfaces or undercuts which are located in the negative direction relative to ejection of the moulding from the mould and this without using additional hydraulic circuits. Another advantage of the invention is that it gives designers the possibility of the actual future plastic components to apply to surface portions, which in the past could limit the design of component parts respectively assembly of components.

### Industrial Applicability

Fields of use of the invention is primarily for the design and manufacture of moulds for any product based on thermoplastics or thermosets.

### Reference Signs List

1 Slider
2 Slider head
3 Block ejector
4 V-guide
5 Moulding product
6 Tool ejector system

## Claims

1. A device for the demoulding of the undercuts in mould design in the sector of thermoplastic and thermosetting comprising, a block ejector (3), where a slider head (2) moulds or demoulds the undercut ie. the negative geometry of a moulding product (5) and a tool ejector system (6), wherein is fixed said block ejector (3),
**characterized in that**
the device consists of a slider (1)-which is integrated by mutual crossing into said block ejector (3) of a tool in a slope in the range from 130° to 165° to the perpendicular to the opening tool axis, wherein the slider head (2) is formed at the top end of said slider (1) and V-guide (4) is formed at the bottom end of said slider (1), wherein the mutual crossing of the slider (1) and the block ejector (3) provides in the extrusion of the block ejector (3) a displacement of the slider head (2) from the undercut and subsequently the possibility of ejection of the finished moulding product (5) from the tool.

2. A method for the demoulding of the undercuts in mould design in the sector of thermoplastic and thermosetting, the tool comprising a block ejector (3) where a slider head (2) moulds or demoulds the undercut, ie. the negative geometry of a moulding product (5), a tool ejector system (6), wherein is fixed the block ejector (3),
**characterized in that**
the tool further comprises a slider (1) which is integrated by mutual crossing into block ejector (3) of a tool in a slope in the range from 130° to 165° to the perpendicular to the opening tool axis, **in that** the slider head (2) is formed at the top end of the slider (1) and V-guide (4) is formed at the bottom end of the slider (1), **in that** said undercut is a negative geometry of the slider head (2), and **in that** the mutual crossing of the slider (1) and the block ejector (3) provides in the extrusion of the block ejector (3) a displacement of the slider head (2) from the undercut and subsequently the possibility of ejection of the finished moulding product (5) from the tool.

## Patentansprüche

1. Vorrichtung zum Entformen einer Hinterschneidung in der Konstruktion von Formen für im Bereich in dem thermoplastischen und dem Duroplast umfasst einen Block Auswerfer (3), wobei die Fläche (2) der Schieber Form oder aus der Form befreit Hinterschneidung ist das Negativ der Geometrie des fertigen Formteil (5) und die Ausstoßanordnung (6), bei dem die feste Block Auswerfer (3)
**dadurch gekennzeichnet, dass**
die Vorrichtung einen Schieber (1) mit gegenseitigen Schnittpunkt der zuvor erwähnten Block Auswerfer (3) montiert bildet die Steigung im Bereich von 135° zur Achse zur Normalen 165° das Werkzeug zu öffnen, wobei die Fläche (2) der Schieber im oberen Bereich ist der Schieber (1) und einem unteren Teil des Schiebers (1) eine Prismenführung (4), in denen die gegenseitige Kreuzung Reiter (1) und Block Auswerfer (3) zum Ausstoßen der Block Auswerfer (3) Entfernung der Fläche (2) geschlossene Geometrie des Werkstücks und dann die Möglichkeit der Freigabe des fertigen Formteil (5) des Werkzeugs.

2. Verfahren zum Entformen einer Hinterschneidung in der Konstruktion von Formen für im Bereich der thermoplastischen und Duro plastischen, wobei das Werkzeug umfaßt einen Block Auswerfer (3), wobei die Fläche (2) einen Schieber aus der Form und geschnitten, um ein Negativ der Geometrie des fertigen Formteil (5) und die Ausstoßanordnung (6), der mit dem Auswurfblock (3) befestigt ist befreit bildet,
**dadurch gekennzeichnet, dass** Das Werkzeug weist weiter einen Schieber (1), die gegenseitige Schnittpunkt des Prüfkörpers Auswerfer montiert ist (3) bildet die Steigung im Bereich von 135° zur Achse der Öffnung des Armaturenbretts (2) mit der Normalen zur 165° der Schieber an der Oberseite des Schiebers (1) und der untere Teil des Schiebers (1) eine prismatische Führung (4), wobei sagte Hinterschneidung eine negative Geometrie der die Fläche (2) Reiter in denen die gegenseitige Kreuzung Schieber (1) und Block Auswerfer (3) zum Ausstoßen der Block Auswerfer (3) Entfernung die Fläche (2) von der geschlossenen Geometrie des Werkstücks und dann die Möglichkeit der Freigabe des fertigen Formteil (5) des Werkzeugs zur Verfügung gestellt.

## Revendications

1. Dispositif pour de démoulage d' une contre-dépouille du secteur de la construction dans les thermoplastiques et éjecteur thermodurcissable comprenant un bloc d'éjection (3), dans lequel la tête (2) de un curseur forme et l'encoche libéré du moule à démoulage d' une contre-dépouille savoir négatif de la géométrie de l'ébauche (5) et l'ensemble d'éjection (6), qui est fixé au bloc d'éjection (3), **caractérisé en ce qu'il** comprend du curseur (1) monté à intersection mutuelle du bloc d'éjection (3) précité forme la pente dans la plage de 135° à 165° à la perpendiculaire à l'axe de l'outil d'ouverture, dans lequel la tête (2) le curseur se trouve dans la partie supérieure dudit curseur (1) et la partie inférieure dudit curseur (1) forme un guide prismatique (4), dans lequel la barre transversale patin de curseur (1) et le bloc d'éjection (3) est prévu pour éjecter le bloc d'éjection (3) assure de suppression la tête (2) le curseur de la géométrie fermée de la pièce, puis la possibilité de libération de la pièce moulée finie (5) de l'outil.

2. Un procédé de démoulage d' une contre-dépouille dans le secteur de la construction dans la forme des thermoplastiques et thermodurcissables, dans lequel l'outil comprend un éjecteur de bloc (3), dans lequel la tête (2) de un curseur forme et l'encoche libéré du moule à démoulage d'une contre-dépouille savoir négatif de la géométrie de l'ébauche (5) et l'ensemble d'éjection (6), qui est fixé au bloc d'éjection (3), **caractérisé en ce qu'il** l'outil comprend en outre un curseur (1) qui est monté à l'intersection mutuelle du bloc d' éjection (3) forme la pente dans la plage de 135° à 165° rapport à la normale à l'axe de l'ouverture du tableau la tête (2) le curseur se trouve au sommet de l'élément curseur (1) et la partie inférieure de ladite curseur (1) forme un guide prismatique (4), ladite contre-dépouille est une géométrie négative des panneaux la tête (2) du curseur, dans lequel la tête de traverser le curseur (1) et un éjecteur de bloc d'éjection (3) prévoient l'extension du bloc éjecteur (3) l'élimination la tête (2) du curseur de la géométrie fermée de la pièce, puis la possibilité de libération de la pièce moulée finie (5) de l'outil.
